(19) Europäisches Patentamt
European Patent Office
Office européen des brevets

(11) EP 4 010 386 B1

(12) EUROPEAN PATENT SPECIFICATION

(45) Date of publication and mention of the grant of the patent:
**06.09.2023 Bulletin 2023/36**

(21) Application number: **20764946.8**

(22) Date of filing: **28.07.2020**

(51) International Patent Classification (IPC):
***C08F 220/18*** *(2006.01)* ***C09J 133/06*** *(2006.01)*
***C08F 2/22*** *(2006.01)*

(52) Cooperative Patent Classification (CPC):
(C-Sets available)
**C09J 133/064; C08F 2/22; C08F 220/1804; C08F 220/1808** (Cont.)

(86) International application number:
**PCT/EP2020/071203**

(87) International publication number:
**WO 2021/023568 (11.02.2021 Gazette 2021/06)**

(54) **METHOD OF IMPROVING SHEAR STABILITY OF HIGHLY CONCENTRATED AQUEOUS ADHESIVE POLYMER COMPOSITIONS**

VERFAHREN ZUR VERBESSERUNG DER SCHERSTABILITÄT VON HOCHKONZENTRIERTEN WÄSSRIGEN KLEBSTOFFPOLYMERZUSAMMENSETZUNGEN

PROCÉDÉ D'AMÉLIORATION DE LA STABILITÉ AU CISAILLEMENT DE COMPOSITIONS POLYMÈRES ADHÉSIVES AQUEUSES HAUTEMENT CONCENTRÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.08.2019 EP 19190030**

(43) Date of publication of application:
**15.06.2022 Bulletin 2022/24**

(73) Proprietor: **BASF SE**
**67056 Ludwigshafen (DE)**

(72) Inventors:
- **GERST, Matthias**
  **67056 Ludwigshafen (DE)**
- **MÖBIUS, Stephan**
  **67056 Ludwigshafen (DE)**
- **GROSS, Michael**
  **67056 Ludwigshafen (DE)**
- **WULFF, Dirk**
  **67056 Ludwigshafen (DE)**

(74) Representative: **BASF IP Association**
**BASF SE**
**GBI-C006**
**67056 Ludwigshafen (DE)**

(56) References cited:
**EP-A2- 0 571 069**
**US-A1- 2005 113 507**
**US-A1- 2019 002 743**
**US-B1- 6 727 327**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/1804, C08F 220/14, C08F 220/36, C08F 220/1802, C08F 212/08, C08F 220/06; C08F 220/1808, C08F 220/14, C08F 220/06, C08F 212/08, C08F 220/20, C08F 220/06; C08F 220/1808, C08F 220/1802, C08F 218/08, C08F 212/08, C08F 220/20, C08F 222/102**

## Description

The invention relates to a method of improving shear stability of highly concentrated aqueous adhesive polymer compositions comprising a specific adhesive polymer which has been prepared by emulsion polymerization and which is dispersed in the aqueous adhesive composition. Said method comprises treating the aqueous adhesive polymer composition with at least one anion exchange resin.

Pressure sensitive adhesives (PSAs) and lamination adhesives based on aqueous polymer dispersions, more particularly based on acrylate dispersions, find broad use for the production of self-adhesive products and laminates, such as self-adhesive sheets, adhesive tapes, labels, film-to-film laminates, and the like. Adhesives based on aqueous polymer dispersions comprise as their principal constituent a polymer which is dispersed in aqueous phase, which has a glass transition temperature of typically below 10°C, and which, when the dispersion is dried, forms an adhesive layer on a substrate.

Water-based adhesives are preferred over solvent based adhesive for the reduction of organic solvent emissions. Of particular interest are aqueous polyacrylate ester dispersions, also known as acrylate latex. Adhesives based on acrylate esters are described in WO 98/23656 and in WO 00/50480, for example.

It is desired that the aqueous adhesive polymer dispersions are highly concentrated in order to minimize energy consumption and drying time when drying substrates coated with that adhesive dispersions. Particularly in the case of modern coating techniques, such as the contactless curtain coating technique, polymer contents of at least 55% by weight are desirable. Aqueous polymer dispersions that are suitable for pressure-sensitive adhesives and have polymer contents of more than 55% by weight are known from WO 2009/127620. The concentration of adhesive polymer dispersions is limited due to a sharp increase in viscosity with increasing concentration. There is typically an exponential increase in viscosity when the polymer content exceeds 50 wt.%. Higher viscosities lead to a higher energy input into the polymer dispersion when the polymer dispersions are exposed to shearing, e.g. during stirring, pumping, tank-to-tank transfer, steam stripping or filtering. There is a risk that this higher energy transfer during shearing of highly concentrated polymer dispersions (solids contents above 50 wt.%, e.g. 55 wt.%, 60 wt.% or more) leads to coagulation and increased instability of the polymer dispersion which can be detected by undesired formation of large size particles or coagulate, particularly in the course of their industrial production and processing on the metric ton scale. The coagulate can lead to blocking of filters or can act as crystallization nucleus for unwanted further particle growth. Therefore a need exists to improving the shear stability of concentrated adhesive polymer dispersions. With many adhesives, moreover, the problem arises that the stability of the adhesive film under moisture exposure is not satisfactory. Exposure to moisture often causes unattractive hazing of the adhesive film, which is undesirable on esthetic grounds particularly in the case of transparent substrates.

EP 571 069 A2 describes a process for improving water-whitening resistance of coatings by removing water-soluble ions from aqueous polymer dispersions by treatment with an ion exchange resin, preferably a mixture of cation exchange resin and anion exchange resin.

The object was to provide a method for making aqueous polymer dispersions which are suitable as adhesives, especially for producing transparent pressure-sensitive adhesive articles or laminates comprising at least one transparent polymer film, with high solids content and an acceptable viscosity of preferably not more than 1500 mPa s (Brookfield viscosity, determined in accordance with DIN EN ISO 3219, 23°C, 100 $sec^{-1}$), with improved shear stability of the dispersions and good water-whitening resistance and good adhesive bonding properties of the adhesive articles. Additionally, a need exists to reduce migratable components in adhesive films, for example for food packaging applications.

It has been found that the object can be achieved by the method as described below.

The invention provides a method of improving shear stability of highly concentrated aqueous adhesive polymer compositions, preferably aqueous pressure sensitive adhesive polymer compositions,

> wherein the aqueous adhesive polymer composition comprises more than 50% by weight, preferably at least 55% by weight or at least 60% by weight, of at least one adhesive polymer which has been prepared by emulsion polymerization and which is dispersed in the aqueous adhesive composition,
>
> wherein the adhesive polymer has been made by free-radical emulsion polymerization of a monomer mixture comprising
>
> > a) at least 60 wt.%, based on the total amount of monomers, of at least one monomer selected from the group consisting of C1 to C20 alkyl acrylates, C1 to C20 alkyl methacrylates, vinyl esters of carboxylic acids containing up to 20 carbons, vinylaromatics having up to 20 carbons, vinyl halides, vinyl ethers of alcohols containing 1 to 10 carbons, ethylenically unsaturated nitriles, aliphatic hydrocarbons having 2 to 8 carbons and one or two double bonds, and mixtures of these monomers,
> >
> > b) from 0.1 to 10 wt.%, based on the total amount of monomers, of at least one monomer having at least one acid group;

c) optionally at least one further monomer, different from the monomers a) and b); said method comprises treating the aqueous adhesive polymer composition with at least one anion exchange resin and not treating the aqueous adhesive polymer composition with a cation exchange resin or with a mixed bed ion exchange resin.

The invention also provides aqueous adhesive polymer compositions obtained by the method as described herein.

The text below occasionally uses the designation "(meth)acryl..." and similar designations as an abbreviating notation for "acryl... or methacryl... ". In the designation Cx alkyl (meth)acrylate and analogous designations, x denotes the number of carbon atoms in the alkyl group.

A mixed bed ion exchange resin is a mixture of an cation exchanger (e.g. an acidic cation exchanger) with an anion exchanger (e.g. a basic anion exchanger).

The glass transition temperature is determined by differential scanning calorimetry (ASTM D 3418-08, midpoint temperature). The glass transition temperature of the polymer in the polymer dispersion is the glass transition temperature obtained when evaluating the second heating curve at a heating rate of 20°C/min.

Particle diameters and particle size distribution can be measured by light scattering (photon correlation spectroscopy, ISO standard 13321:1996).

The term "aqueous polymer dispersion" refers to solvent systems primarily based on water, preferably containing no or less than 20%, less than 10%, less than 5% or less than 1% by weight of organic solvents, based on the total composition.

The adhesive polymer is preferably a pressure-sensitive adhesive polymer. A pressure-sensitive adhesive (PSA) is a viscoelastic adhesive whose set film at room temperature (20°C) in the dry state remains permanently tacky and adhesive. Bonding to substrates is accomplished instantaneously by gentle applied pressure.

The adhesive polymer may have a monomodal particle size distribution. The adhesive polymer may have a bimodal or a multimodal particle size distribution. "Multimodal" means more than two particle modes. The size distribution of the dispersion particles is monomodal when measurement of the particle size distribution contains only one single maximum. A bimodal particle size distribution is a particle size distribution defined by exhibiting two distinct maxima in the particle size measurement. A multimodal particle size distribution is a particle size distribution defined by exhibiting more than two distinct maxima in the particle size measurement. Preferably, a first particle mode has a weight average particle diameter in the range of 50 to 200 nm, preferably from 100 to 200 nm. A second particle mode has a weight average particle diameter preferably in the range of from above 250 nm and up to 1200 nm, preferably from above 300 and up to 900 nm. Preferably, the average particle diameters of the first and second mode differ by at least 50 nm.

The polymer dispersions of the invention may have a polymodal particle size distribution. In other words, the distribution of the particle sizes of the polymer particles present in the dispersion, discriminated according to mass fractions, differs significantly from a monomodal, i.e. Gaussian distribution, and generally possesses at least two pronounced maxima, which differ generally by at least 50 nm, more particularly at least 100 nm. The polymodality of a particle size distribution can be characterized, conventionally, by the polydispersity index Q:

$$Q = \frac{d_{90} - d_{10}}{d_{50}}$$

in which

$d_{10}$ is the particle diameter below which 10% by weight of the polymer particles fall,

$d_{50}$ is the particle diameter below which 50% by weight of the polymer particles fall, and

$d_{90}$ is the particle diameter below which 90% by weight of the polymer particles fall.

Whereas monomodal particle size distributions are generally characterized by a polydispersity index Q of below 0.3, e.g., 0.05 to 0.3, polymodal polymer dispersions customarily have a polydispersity index Q of well above 0.3, generally at least 0.4, frequently at least 0.5, and more particularly at least 0.6, e.g., in the range from 0.4 to 3, more particularly 0.5 to 2.5, and especially 0.6 to 2.

The viscosity of the aqueous adhesive dispersion is preferably not more than 1500 mPa s and preferably at least 50 mPa s, for example from 50 to 800 mPa s measured as Brookfield viscosity, determined in accordance with DIN EN ISO 3219 at 23°C and 100 $sec^{-1}$.

Suitable anion exchange resins include polymers containing amine functional groups (weak base anion exchanger) or polymers containing quaternary ammonium functional groups (strong base anion exchanger). Suitable anion exchange resins include copolymers of styrene and divinyl benzene and resins with an acrylic matrix, in particular resins with a crosslinked acrylic gel structure. Anion exchange resins include copolymers of styrene and divinyl benzene with quaternary ammonium functional groups, copolymers of styrene and divinyl benzene with tertiary amine functional groups, crosslinked acrylic polymers with quaternary ammonium functional groups and crosslinked acrylic polymers with tertiary amine functional groups. Anions of the polymer dispersions (such as sulfates or anionic or acidic oligomers) may be exchanged against hydroxide ions ($OH^-$) of the anion exchange resin or (optionally) against anionic surfactants with which the anion exchange resin has been pre-loaded.

The anion exchange resins preferably have a total exchange capacity of at least 0.9 meq/ml. Examples are Amberlite® IRA67 and Amberlite® IRA402 OH. The anion exchange resins are preferably used in an amount of less than 20 wt.-% (dry), preferably from 1 to 15 wt.%, based on the amount of adhesive polymer (dry). The filtering material can be for example in the form of a packed column or in the form of filter bags.

Anion exchange is effected for example by contacting the aqueous polymer dispersion with the anion exchange resin for a time of preferably at least 10 min or more, preferably for a time of from 15 min to 2 hours; or by filtering through a filtering material containing anion exchange resin at a rate allowing a contact time of for example 10 seconds or more, optionally by applying pressure.

The aqueous adhesive polymer dispersions used in accordance with the invention are obtainable by free radical emulsion polymerization of ethylenically unsaturated compounds (monomers).

Monomers a)

The monomer mixture consists of at least 60 wt.%, preferably at least 80 wt.%, as for example from 80 to 99.9 wt.%, more preferably at least 90 wt.%, based on the total amount of monomers, of at least one monomer a) selected from the group consisting of C1 to C20 alkyl acrylates, C1 to C20 alkyl methacrylates, vinyl esters of carboxylic acids containing up to 20 carbon atoms, vinylaromatics having up to 20 carbon atoms, vinyl halides, vinyl ethers of alcohols containing 1 to 10 carbon atoms, aliphatic hydrocarbons having 2 to 8 carbon atoms and one or two double bonds, and mixtures of these monomers.

Suitable monomers a) are, for example, (meth)acrylic acid alkyl esters with a $C_1$-$C_{10}$ alkyl radical, such as methyl methacrylate, methyl acrylate, n-butyl acrylate, ethyl acrylate and 2-ethylhexyl acrylate, and also behenyl (meth)acrylate, isobutyl acrylate, tert-butyl (meth)acrylate, and cyclohexyl (meth)acrylate. In particular, mixtures of the alkyl (meth)acrylates are also suitable. Vinyl esters of carboxylic acids having 1 to 20 carbons are, for example, vinyl laurate, vinyl stearate, vinyl propionate, Versatic acid vinyl esters, and vinyl acetate. Useful vinylaromatic compounds include vinyltoluene, alpha- and para-methylstyrene, alpha-butylstyrene, 4-n-butylstyrene, 4-n-decylstyrene and, preferably, styrene. The vinyl halides are ethylenically unsaturated compounds substituted by chlorine, fluorine or bromine, preferably vinyl chloride and vinylidene chloride. Examples of vinyl ethers which may be mentioned are vinyl methyl ether or vinyl isobutyl ether. Preference is given to vinyl ethers of alcohols comprising 1 to 4 carbons. Hydrocarbons having 4 to 8 carbons and two olefinic double bonds include butadiene, isoprene and chloroprene.

Preferred as monomers a) are the $C_1$ to $C_{10}$ alkyl acrylates and methacrylates, more particularly $C_1$ to $C_8$ alkyl acrylates and methacrylates, and also styrene, and mixtures thereof. Especially preferred are methyl acrylate, methyl methacrylate, n-butyl acrylate, n-butyl methacrylate, n-hexyl acrylate, octyl acrylate and 2-ethylhexyl acrylate, 2-propylheptyl acrylate, styrene, and also mixtures of these monomers.

Preferably the monomers a) are selected from the group consisting of C1 to C10 alkyl acrylates, C1 to C10 alkyl methacrylates, styrene, and mixtures of these monomers.

Preferably the monomer a) comprises no ethyl acrylate or less than 10 wt.-% ethyl acrylate, based on the total amount of the monomers.

Preferably, 80 wt.% or more of monomers a) are "soft" monomers and 20 wt.% or less of monomers a) are "hard" monomers. Soft monomers have a glass transition temperature of -30 °C or less when polymerized as homopolymer. Hard monomers have a glass transition temperature of more than -30 °C when polymerized as homopolymer.

Monomers b)

The monomer mixture consists to an extent of from 0.1 to 10 wt.%, more particularly from 0.1 to 8 wt.% or from 0.5 to 7 wt.% based on the total amount of monomers, of at least one monomer having at least one acid group (acid monomer). The acid monomers b) comprise monomers which contain at least one acid group, and also their anhydrides and salts thereof. The monomers b) include alpha,beta-monoethylenically unsaturated monocarboxylic and dicarboxylic acids, monoesters of alpha,beta-monoethylenically unsaturated dicarboxylic acids, the anhydrides of the aforesaid alpha,beta-monoethylenically unsaturated carboxylic acids, and also ethylenically unsaturated sulfonic acids, phosphonic acids or dihydrogenphosphates and their water-soluble salts, as for example their alkali metal salts. Examples thereof

are acrylic acid, methacrylic acid, itaconic acid, maleic acid, fumaric acid, crotonic acid, vinylacetic acid, and vinyllactic acid. Examples of suitable ethylenically unsaturated sulfonic acids include vinylsulfonic acid, styrenesulfonic acid, acrylamidomethylpropanesulfonic acid, sulfopropyl acrylate and sulfopropyl methacrylate. Preferred monomers b) are alpha,beta-monoethylenically unsaturated C3-C8 carboxylic acids and C4-C8 dicarboxylic acids, e.g., acrylic acid, methacrylic acid, itaconic acid, maleic acid, fumaric acid, crotonic acid, vinylacetic acid, vinyllactic acid, vinylsulfonic acid, styrenesulfonic acid, acrylamidoglycolic acid, acrylamidomethylpropane sulfonic acid, sulfopropyl acrylate, sulfopropyl methacrylate, their respective anhydrides and mixtures of these monomers. Particularly preferred monomers b) are itaconic acid, acrylic acid and methacrylic acid.

Preferably the monomers a) are used in an amount of at least 80 wt.%, based on the total amount of the monomers, and are selected from the group consisting of C1 to C10 alkyl acrylates, C1 to C10 alkyl methacrylates, styrene, and a mixture thereof; and the monomers b) are used in an amount of 0.5 to 7 wt.%, based on the total amount of the monomers, and are selected from the group consisting of acrylic acid, methacrylic acid, itaconic acid, and a mixture thereof.

<u>Monomers c)</u>

The monomer mixture may optionally comprise at least one further monomer c), which is different from the monomers a) and b). The monomers c) may be used, for example, from 0 to 10 wt.% or from 0 to 5 wt.%, more particularly from 0.1 to 10 wt.% or from 0.1 to 5 wt.% or from 0.2 to 3 wt.%, based on the total amount of monomers.

Monomers c) are, for example, amides of ethylenically unsaturated carboxylic acids (for example acrylamide, methacrylamide), N-alkylolamides of ethylenically unsaturated carboxylic acids (for example N-methylolacrylamide and N-methylolmethacrylamide), phenyloxyethyl glycol mono(meth)acrylate. Further monomers c) are also, for example, monomers containing hydroxyl groups, more particularly hydroxyalkyl esters of ethylenically unsaturated carboxylic acids, preferably $C_1$-$C_{10}$ hydroxyalkyl (meth)acrylates such as, for example, hydroxyethyl acrylate, hydroxyethyl methacrylate, hydroxypropyl acrylate or hydroxypropyl methacrylate, and also 4-hydroxybutyl acrylate.

Further monomers c) are also, for example, monomers containing amino groups, more particularly the aminoalkyl esters of the aforesaid alpha,beta-monoethylenically unsaturated carboxylic acids, preferably $C_1$-$C_{10}$ aminoalkyl(meth)acrylates such as, for example, 2-aminoethyl-(meth)acrylate or tert-butylaminoethyl methacrylate. Monomers c) may be the nitriles of alpha,beta-monoethylenically unsaturated C3-C8 carboxylic acids, such as acrylonitrile or methacrylonitrile for example. Other suitable monomers c) are bifunctional monomers which as well as an ethylenically unsaturated double bond have at least one glycidyl group, oxazoline group, ureido group, ureido-analogous group or carbonyl group, for example diacetone acrylamide.

The adhesive polymer preferably has a glass transition temperature of less than 10 °C, preferably from -50°C to less than 0 °C. Therefore, the monomers of the polymerization are preferably selected such that the glass transition temperature is less than 10 °C, preferably from -50°C to less than 0 °C. By purposive variation of monomer type and quantity, those skilled in the art are able according to the invention to prepare aqueous polymeric compositions whose polymers have a glass transition temperature in the desired range. Orientation is possible by means of the Fox equation. According to Fox (T.G. Fox, Bull. Am. Phys. Soc. 1956 [Ser. II] 1, page 123, and according to Ullmann's Encyclopädie der technischen Chemie, Vol. 19, page 18, 4th edition, Verlag Chemie, Weinheim, 1980), the glass transition temperature of copolymers is given to a good approximation by:

$$1/T_g = x^1/T_g^1 + x^2/T_g^2 + .... x^n/T_g^n,$$

where $x^1$, $x^2$, .... $x^n$ are the mass fractions of the monomers 1, 2, .... n and $T_g^1$, $T_g^2$, .... $T_g^n$ are the glass transition temperatures in degrees kelvin of the polymers synthesized from only one of the monomers 1, 2, .... n at a time. The $T_g$ values for the homopolymers of the majority of monomers are known and are listed for example in Ullmann's Ecyclopedia of Industrial Chemistry, Vol. 5, Vol. A21, page 169, VCH Weinheim, 1992; further sources for glass transition temperatures of homopolymers are, for example, J. Brandrup, E.H. Immergut, Polymer Handbook, 1st Ed., J. Wiley, New York 1966, 2nd Ed. J. Wiley, New York 1975, and 3rd Ed. J. Wiley, New York 1989.

The polymer dispersion of the invention is prepared by emulsion polymerization. Emulsion polymerization comprises polymerizing ethylenically unsaturated compounds (monomers) in water using typically ionic and/or nonionic emulsifiers and/or protective colloids or stabilizers as surface-active compounds to stabilize the monomer droplets and the polymer particles subsequently formed from the monomers. A detailed description of suitable protective colloids is found in Houben-Weyl, Methoden der organischen Chemie, Volume XIV/1, Makromolekulare Stoffe [Macromolecular Compounds], Georg-Thieme-Verlag, Stuttgart, 1961, pp. 411 to 420. Suitable emulsifiers include anionic, cationic, and nonionic emulsifiers. As accompanying surface-active substances it is preferred to use exclusively emulsifiers, whose molecular weights, unlike those of the protective colloids, are usually below 2000 g/mol. Where mixtures of surface-active substances are used the individual components must of course be compatible with one another, something which in case of doubt can be checked by means of a few preliminary tests. Preference is given to using anionic and nonionic emulsifiers as surface-active substances. Common accompanying emulsifiers are, for example, ethoxylated fatty alcohols (EO units: 3 to 50, alkyl radical: $C_8$ to $C_{36}$), ethoxylated mono-, di-, and tri-alkylphenols (EO units: 3 to 50, alkyl radical: $C_4$ to $C_9$), alkali metal salts of dialkyl esters of sulfosuccinic acid and also alkali metal salts and ammonium salts of alkyl sulfates (alkyl radical: $C_8$ to $C_{12}$), of ethoxylated alkanols (EO units: 4 to 30, alkyl radical: $C_{12}$ to $C_{18}$), of ethoxylated alkylphenols (EO units: 3 to 50, alkyl radical: $C_4$ to $C_9$), of alkylsulfonic acids (alkyl radical: $C_{12}$ to $C_{18}$), and of alkylarylsulfonic acids (alkyl radical: $C_9$ to $C_{18}$).

Further suitable emulsifiers are compounds of the general formula II

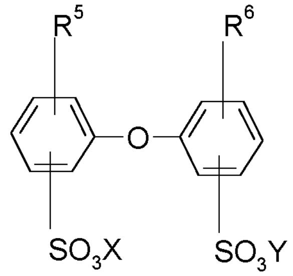

(II)

in which $R^5$ and $R^6$ are hydrogen or $C_4$ to $C_{14}$ alkyl and are not simultaneously hydrogen, and X and Y can be alkali metal ions and/or ammonium ions. Preferably $R^5$ and $R^6$ are linear or branched alkyl radicals having 6 to 18 carbon atoms or hydrogen and in particular having 6, 12, and 16 carbon atoms, with $R^5$ and $R^6$ not both simultaneously being hydrogen. X and Y are preferably sodium, potassium or ammonium ions, with sodium being particularly preferred. Particularly advantageous compounds are compounds II in which X and Y are sodium, $R^5$ is a branched alkyl radical having 12 carbon atoms, and $R^6$ is hydrogen or $R^5$. Frequently use is made of technical-grade mixtures which contain a fraction of from 50 to 90% by weight of the monoalkylated product, an example being Dowfax®2A1 (trade mark of the Dow Chemical Company).

Suitable emulsifiers are also found in Houben-Weyl, Methoden der organischen Chemie, Volume 14/1, Makromolekulare Stoffe [Macromolecular Compounds], Georg Thieme Verlag, Stuttgart, 1961, pages 192 to 208.

Examples of emulsifier trade names include Dowfax®2 A1, Emulan® NP 50, Dextrol® OC 50, Emulgator 825, Emulgator 825 S, Emulan® OG, Texapon® NSO, Nekanil® 904 S, Lumiten® I-RA, Lumiten® E 3065, Disponil® FES 77, Lutensol® AT 18, Steinapol VSL, and Emulphor NPS 25.

For the present invention non-ionic emulsifiers, ionic emulsifiers or protective colloids may be used. The compounds in question may be ionic emulsifiers, especially salts and acids, such as carboxylic acids, sulfonic acids, and sulfates, sulfonates or carboxylates. In particular it is also possible to use mixtures of ionic and nonionic emulsifiers.

The surface-active substance is used usually in amounts of from 0.1 to 10 parts by weight, preferably from 0.2 to 5 parts by weight per 100 parts by weight of the monomers to be polymerized.

Water-soluble initiators for the emulsion polymerization are for example ammonium salts and alkali metal salts of peroxodisulfuric acid, e.g., sodium peroxodisulfate, hydrogen peroxide or organic peroxides, e.g., tert-butyl hydroperoxide. Also suitable are what are called reduction-oxidation (Red-Ox) initiator systems. The Red-Ox initiator systems are composed of at least one, usually inorganic, reducing agent and one organic or inorganic oxidizing agent. The oxidizing component comprises, for example, the initiators already mentioned above for the emulsion polymerization. The reducing components comprise, for example, alkali metal salts of sulfurous acid, such as sodium sulfite, sodium hydrogen sulfite, alkali metal salts of disulfurous acid such as sodium disulfite, bisulfite addition compounds of aliphatic aldehydes and ketones, such as acetone bisulfite, or reducing agents such as hydroxymethanesulfinic acid and the salts thereof, or ascorbic acid. The red-ox initiator systems can be used together with soluble metal compounds whose metallic component is able to exist in a plurality of valence states. Customary Red-Ox initiator systems are, for example, ascorbic acid/iron(II) sulfate/sodium peroxodisulfate, tert-butyl hydroperoxide/sodium disulfite, tert-butyl hydroperoxide/Na hydroxymethanesulfinate. The individual components, the reducing component for example, can also be mixtures, an example being a mixture of the sodium salt of hydroxymethanesulfinic acid and sodium disulfite. The compounds stated are used generally in the form of aqueous solutions, the lower concentration being determined by the amount of water that is acceptable in the dispersion and the upper concentration by the solubility of the respective compound in water. In general the concentration is from 0.1 to 30% by weight, preferably from 0.5 to 20% by weight, more preferably from 1.0 to 10% by weight, based on the solution. The amount of the initiators is generally from 0.1 to 10% by weight, preferably from 0.5 to 5% by weight, based on the monomers to be polymerized. It is also possible for two or more different initiators to be used in the emulsion polymerization.

For the polymerization it is possible to use molecular weight regulators (also called chain transfer agents). By

this means it is possible to reduce the molar mass of the emulsion polymer through a chain termination reaction. The chain transfer agents are bonded to the polymer in this procedure, generally to the chain end. The amount of the chain transfer agents is preferably 0.05 to 4 parts by weight, more preferably 0.05 to 0.8 part by weight, and very preferably 0.1 to 0.6 part by weight, per 100 parts by weight of the monomers to be polymerized. Suitable chain transfer agents are, for example, compounds having a thiol group such as tert-butyl mercaptan, thioglycolic acid 2-ethylhexyl ester, mercaptoethanol, mercaptopropyl trimethoxysilane or tert-dodecyl mercaptan. The chain transfer agents are preferably compounds of low molecular mass, having a molar weight of less than 2000, more particularly less than 1000 g/mol. Preferred are 2-ethylhexyl thioglycolate (EHTG), isooctyl 3-mercaptopropionate (IOMPA) and tert-dodecyl mercaptan (tDMK).

The emulsion polymerization takes place in general at from 30 to 130°C, preferably from 50 to 90°C. The polymerization medium may be composed either of water alone or of mixtures of water and liquids miscible therewith such as methanol. Preferably just water is used. The emulsion polymerization can be carried out either as a batch operation or in the form of a feed process, including staged or gradient procedures. Preference is given to the feed process, in which a portion of the polymerization mixture is introduced as an initial charge, heated to the polymerization temperature, and subjected to partial polymerization and then the remainder of the polymerization mixture is supplied to the polymerization zone, usually by way of two or more spatially separate feeds, of which one or more comprise(s) the monomers in pure form or in emulsified form, continuously, in stages or subject to a concentration gradient, during which the polymerization is maintained. In the polymerization it is also possible for a polymer seed to be included in the initial charge in order, for example, to establish the particle size more effectively.

The manner in which the initiator is added to the polymerization vessel in the course of the free-radical aqueous emulsion polymerization is known to one of ordinary skill in the art. Either it can be included in its entirety in the initial charge to the polymerization vessel or else it can be inserted continuously or in stages at the rate at which it is consumed in the course of the free-radical aqueous emulsion polymerization. For any given case this will depend both on the chemical nature of the initiator system and on the polymerization temperature. Preferably some of it is included in the initial charge and the remainder is supplied to the polymerization zone at the rate at which it is consumed. To remove residual monomers it is usual to add initiator after the end of the emulsion polymerization, i.e., after a monomer conversion of at least 95%. The individual components can be added to the reactor, in the case of the feed process, from above, in the side, or from below, through the reactor floor.

The aqueous adhesive polymer dispersions comprises more than 50% by weight, preferably at least 56% by weight or at least 60% by weight of solids. The polymer dispersions obtained typically include water-soluble anionic compounds. Compounds of this kind are, for example, ionic emulsifiers, ionic constituents of initiator systems, or other ionic secondary products which are formed while the emulsion polymerization is being carried out. At least part of these anionic compounds are exchanged by treatment with the anion exchange resin.

The polymerization may take place with seed control, i.e., in the presence of polymer seed (seed latex). Seed latex is an aqueous dispersion of finely divided polymer particles having an average particle diameter of preferably 20 to 40 nm. Seed latex is used in an amount of preferably 0.01 to 0.5 part by weight, more preferably of 0.03 to 0.3 part by weight, or of 0.03 to less than or equal to 0.1 part by weight, per 100 parts by weight of monomers. Suitable seed latex is for example a latex based on polystyrene or based on polymethyl methacrylate. A preferred seed latex is polystyrene seed.

Acid groups in the polymer may be neutralized by the feeding of a neutralizing agent during or after polymerization, with the acid groups being neutralized wholly or partly by the feeding of a base, the feed of the base. The pH of the polymer dispersion is preferably adjusted to a pH greater than 5, more particularly to a pH of between 5.5 and 8.

The aqueous adhesive polymer dispersions obtained in this way have improved shear stability. When used as coating materials they exhibit improved water whitening behavior. In particular the polymer dispersions are suitable as adhesives, preferably as pressure-sensitive adhesives or as laminating adhesive for the production of laminates such as composite films. The adhesive compositions may comprise solely the aqueous dispersion of the polymer.

The adhesive polymer compositions may comprise further additives, such as at least one of crosslinkers, wetting agents, fillers, dyes, flow agents, thickeners, light stabilizers, biocides, defoamers or tackifiers (tackifying resins). The amount of additives (other than tackifiers) is preferably 0.05 to 5 parts by weight, or 0.1 to 3 parts by weight per 100 parts by weight of adhesive polymer (solid). Tackifiers are, for example, natural resins, such as rosins and derivatives thereof formed by disproportionation or isomerization, polymerization, dimerization, hydrogenation. These natural resins can be present in their salt form (with monovalent or polyvalent counterions (cations), for example) or, preferably, in their esterified form. Alcohols used for the esterification can be monohydric or polyhydric. Examples are methanol, ethanediol, diethylene glycol, triethylene glycol, 1,2,3-propanethiol, pentaerythritol. Suitable tackifier are also tackifying hydrocarbon resins, e.g., coumarone-indene resins, polyterpene resins, hydrocarbon resins based on unsaturated CH compounds, such as butadiene, pentene, methylbutene, isoprene, piperylene, divinylmethane, pentadiene, cyclopentene, cyclopentadiene, cyclohexadiene, styrene, $\alpha$-methylstyrene, vinyltoluene. As tackifiers use is also increasingly being made of polyacrylates which have a low molar weight. Preferably these polyacrylates have a weight-average

molecular weight $M_w$ below 30 000. The polyacrylates are composed preferably at least 60%, in particular at least 80%, by weight of $C_1$-$C_8$ alkyl (meth)acrylates. Preferred tackifiers are natural or chemically modified rosins. Rosins are composed predominantly of abietic acid or derivatives thereof. The amount of the tackifiers by weight is preferably from 5 to 100 parts by weight, more preferably from 10 to 50 parts by weight, per 100 parts by weight of polymer (solids/solids).

The (pressure-sensitive) adhesive is suitable in particular for bonding substrates wherein at least one of the substrate surfaces to be bonded is a transparent polymer film. Therefore, the invention also provides the use of the aqueous adhesive composition as described above for making self-adhesive articles or for bonding substrates wherein the substrate of the self-adhesive article or at least one of the substrates to be bonded is a transparent substrate, preferably a transparent polymer film, preferably a film of PVC (especially plasticized PVC), polyethylene terephthalate (PET), polyethylene or polypropylene.

In particular the adhesives of the invention are suitable for producing self-adhesive articles, such as labels, adhesive tapes or adhesive sheets, e.g., protective sheets. The self-adhesive articles are composed for example of a backing and a layer of the adhesive applied to one or both sides, preferably one side. The backing material can be for example paper, or preferably transparent polymer films. Transparent polymer films are for example polyolefins such as polyethylene, polypropylene or polyvinyl chloride (PVC) or PET. PVC may be plasticized PVC. By plasticized PVC is meant polyvinyl chloride which includes plasticizers and has a reduced softening temperature. Examples of customary plasticizers are phthalates, epoxides, adipic esters. The amount of plasticizers in the plasticized PVC is generally more than 10% and in particular more than 20% by weight.

The invention also provides self-adhesive articles, preferably transparent self-adhesive labels, tapes or self-adhesive sheets, obtainable by use of the aqueous adhesive polymer compositions made a described above.

To produce the layer of adhesive on the backing material it is possible for the backing material to be coated in customary fashion. The coated substrates obtained are used for example as self-adhesive articles, such as labels, adhesive tapes or films. The self-adhesive articles are particularly suitable for outdoor applications. In particular it is possible to use printed self-adhesive films in the outdoor sector and it is possible for them to be stuck, for example, to advertising hoardings or vehicles of any kind.

The adhesive layer thickness is preferably from 0.1 to 20 $g/m^2$ for film-to-film-lamination, 10 to 30 $g/m^2$ for adhesive labels and preferably from 30 to 150 $g/m^2$ for adhesive tapes.

Customary coating techniques may be employed, examples being knife coating, spreading, roller coating, reverse roller coating, gravure roller coating, reverse gravure roller coating, brush coating, rod coating, spray coating, airbrush coating, meniscus coating, curtain coating or dip coating. After a short time for the water of the dispersion to evaporate (preferably after 1 to 60 seconds), the coated substrate may then be laminated with a second substrate, the temperature may be for example from 20 to 200°C, preferably from 20 to 100°C, and the pressure being able, for example, to be 100 to 3000 $kN/m^2$, preferably 300 to 2000 $kN/m^2$.

At least one of the films may be metallized or printed on the side coated with the adhesive. Examples of suitable substrates include polymer films, more particularly films of polyethylene (PE), oriented polypropylene (OPP), unoriented polypropylene (CPP), polyamide (PA), polyethylene terephthalate (PET), polyacetate, cellophane, polymer films coated (vapor coated) with metal, e.g., aluminum (metallized films for short), or metal foils, composed of aluminum, for example. The stated foils and films may be bonded to one another or to a film or foil of another type - for example polymer films to metal foils, different polymer films with one another, etc. The stated foils and films may also, for example, have been printed with printing inks.

One embodiment of the invention is a composite film produced using one of the aqueous polymer dispersions of the invention described above, the material of a first film being selected from OPP, CPP, PE, PET and PA, and the material of a second film or foil being selected from OPP, CPP, PE, PET, PA and metal foil. In one embodiment of the invention, the first film or foil and/or the second film or foil is printed or metallized on the respective size to be coated with the polymer dispersion of the invention. The thickness of the substrate films may amount for example to from 5 to 100 $\mu$m, preferably from 5 to 40 $\mu$m.

Surface treatment of the foil or film substrates ahead of coating with a polymer dispersion of the invention is not absolutely necessary. However, better results can be obtained if the surface of the film or foil substrates are modified prior to coating. In this case it is possible to employ customary surface treatments, such as corona treatment in order to boost the adhesion. The corona treatment or other surface treatments are carried out to the extent required for sufficient wettability with the coating composition. Customarily, corona treatment of approximately 10 watts per square meter per minute is sufficient for this purpose. Alternatively or additionally it is also possible, optionally, to use primers or tie coats between foil or film substrate and adhesive coating. Furthermore, other, additional functional layers may be present on the composite films, examples being barrier layers, print layers, color layers or varnish layers, or protective layers. These functional layers may be located externally, i.e., on the side of the foil or film substrate facing away from the adhesive-coated side, or internally, between foil or film substrate and adhesive layer.

Particular advantages of the production method of the invention and of the products of the invention are the following in particular:

- good shear stability
- good water whitening resistance
- reduction of migratable components.

Examples

Abbreviations

| | |
|---|---|
| pphm | parts by weight per hundred parts by weight of monomer |
| EHA | 2-ethylhexyl acrylate |
| MMA | methyl methacrylate |
| MA | methyl acrylate |
| S | styrene |
| HPA | hydroxypropyl acrylate |
| AS | acrylic acid |
| BDA-2 | butanediol diacrylate |
| IRA 402 OH | Amberlite® IRA402 OH; strong base anion exchanger, matrix polystyrene divinylbenzene copolymer with quaternary ammonium functional groups; total exchange capacity ≥ 1.60 eq/l (free base form) |
| IRA67 | Amberlite® IRA67; weak base anion exchanger, matrix crosslinked acrylic gel with tertiary amine functional groups; total exchange capacity 0.95 meq/ml minimum ($OH^-$ form) |
| Lewatit® adsorber VP 1064 | macroporous adsorber resin without functional groups |
| IRI20H | Amberlite® IRI20H, strong acid cation exchange resin; matrix styrene divinylbenzene copolymer with sulfonic acid functional groups; total exchange capacity ≥ 1.80 eq/l ($H^+$ form) |
| MB20 | Amberlite® MB20 mixed bed cation and anion exchange resin, mixture of a strongly acidic cation exchanger with a strongly basic anion exchanger |

**Acrylic polymer dispersions**

Example 1

Acrylic polymer dispersion made by emulsion polymerization of (amounts in pphm):

78,5 EHA, 8 MMA, 8 MA, 2 S, 2HPA, 1,5 AS
monomodal particle size distribution
solids content: 53%
viscosity: 30-150 mPa s (23°C; 250 1/s; according to DIN EN ISO 3219)
Tg: -40°C
A polymer film made from this polymer dispersion after removal of the water and after storage of the polymer film in water for 6 hours and for 20 hours remained crystal clear.

Example 2

Acrylic polymer dispersion made by emulsion polymerization of (amounts in pphm):

48 EHA, 41 EA, 5 VAc, 3 S, 3 AS, 0,1 BDA-2
monomodal particle size distribution
solids content: 51%
viscosity: 40-80 mPa s (23°C; 250 1/s; according to DIN EN ISO 3219)
Tg: -30°C
A polymer film made from this polymer dispersion after removal of the water and after storage of the polymer film in water for 6 hours turned slightly turbid.

Example 3

Acrylic polymer dispersion made by emulsion polymerization of

85 parts by weight n-butyl acrylate, 10 parts by weight styrene and 5 parts by weight of methacrylic acid
bi-modal particle size distribution: 60 wt.% 140 nm; 40 wt.% 510 nm solids content: 61%
viscosity: 100 - 200 mPa s )23 °C)
Tg: -27 °C

Example 4

Acrylic polymer dispersion made by emulsion polymerization of (amounts in pphm) 86.65 n-butyl acrylate, 3.75 methyl methacrylate, 1.25 ureido methacrylate, 3.9 ethyl acrylate, 1 styrene and 1,5 acrylic acid

trimodal particle size distribution
particle size maxima at about 150 nm, 350 nm, 900 nm
solids content: 60%
viscosity: about 500 mPa s (23°C; 100 1/s; according to DIN EN ISO 3219)
Tg: -35 °C

Example 5

Acrylic polymer dispersion made by emulsion polymerization of (amounts in pphm) 78.8 2-ethylhexyl acrylate, 7.9 MMA, 8 methyl acrylate, 2 S, 2 HPA and 0.5 acrylic acid bimodal particle size distribution,

particle size maxima at about 150 nm and 600 nm
solids content: 60%
viscosity: 30-150 mPa s (23°C; 250 1/s; according to DIN EN ISO 3219)
Tg: -45°C

Example 6

Acrylic polymer dispersion made by emulsion polymerization of (amounts in pphm)

79 EHA, 9 MMA, 8 MA, 1 S, 2 HPA, 1 AS
bimodal particle size distribution; particle size maxima at about 120 nm and 330 nm solids content: 50%
viscosity: about 100 mPa s (23°C; 100 1/s; according to DIN EN ISO 3219)
Tg: -43 °C

**Particle size measurement by light scattering**

Measurement of particle sizes and particle size distributions is done by quasi-elastic light scattering The particle diameter of polymer particles and of coagulates is measured at a 0.01 to 0.1 wt.-% aqueous polymer dispersion at 23°.

**Method of ion exchange:**

Polymer dispersion samples are mixed with anion exchange resins for 1 hour. Types and amounts of ion exchange resins are listed in tables 1 to 6. Anion exchange resin is removed from the polymer dispersions by filtration.

**Measurement of shear stability**

12 g of polymer dispersion sample is placed in a beaker and sheared. Shearing time and shearing rate is listed in tables 1 to 6. 1 g of the samples is diluted with 1.5 kg of water. Particle size distribution is measured by the light scattering method. Production of coagulates with a particle size of 10 μm and more is an indication of shear instability.

The results of the shear stability tests are summarized in tables 1 to 6.

Table 1: Shear stability test results of example 1; coagulate particles in µg/g

| Particle size | Example 1 | Example 1 Anion exchange[2)] | Example 1 Sheared[1)] | Example 1 Anion exchange[2)] Sheared [1)] |
|---|---|---|---|---|
| 10-25 µm | 1648 | 1630 | 7774 | 4337 |
| 10-250 µm | 4132 | 4214 | 10953 | 6794 |
| > 10µm | 4132 | 4214 | 11168 | 6802 |
| [1)] shearing rate 5000 1/s for 5 minutes [2)] 5 pphm IRA67 | | | | |

Table 2: Shear stability test results of example 2; coagulate particles in µg/g

| Particle size | Example 2 | Example 2 Anion exchange[2)] | Example 2 Sheared [1)] | Example 2 Anion exchange[2)] Sheared [1)] |
|---|---|---|---|---|
| 10-25 µm | 111 | 108 | 1205 | 79 |
| 10-250 µm | 139 | 130 | 1235 | 139 |
| > 10µm | 139 | 130 | 1282 | 162 |
| [1)] shearing rate 3000 1/s for 5 minutes [2)] 5 pphm IRA67 | | | | |

Table 3: Shear stability test results of example 3; coagulate particles in µg/g

| Particle size | Example 3 | Example 3 Anion exchange[2)] | Example 3 Sheared [1)] | Example 3 Anion exchange[2)] Sheared [1)] |
|---|---|---|---|---|
| 10-25 µm | 599 | 343 | 28857 | 428 |
| 10-250 µm | 1147 | 1162 | 51391 | 1236 |
| > 10µm | 1232 | 1178 | 51529 | 1236 |
| [1)] shearing rate 5000 1/s for 5 minutes [2)] 10 pphm IRA67 | | | | |

Table 4: Shear stability test results of example 4; coagulate particles in µg/g

| Particle size | Example 4 | Example 4 Anion exchange [2)] | Example 4 Sheared [1)] | Example 4 Anion exchange [2)] Sheared [1)] |
|---|---|---|---|---|
| 10-25 µm | 13713 | 13290 | 30827 | 13651 |
| 10-250 µm | 17274 | 17619 | 35293 | 18052 |
| > 10µm | 17274 | 17619 | 35293 | 18386 |
| [1)] shearing rate 5000 1/s for 5 minutes [2)] 10 pphm IRA67 | | | | |

Table 5: Shear stability test results of example 5; coagulate particles in μg/g

| Particle size | Example 5 | Example 5 Anion exchange 2) | Example 5 Sheared 1) | Example 5 Anion exchange 2) Sheared 1) |
|---|---|---|---|---|
| 10-25 μm | 5281 | 5320 | 17515 | 10182 |
| 10-250 μm | 9096 | 9117 | 22868 | 14374 |
| > 10μm | 9112 | 9117 | 22868 | 14374 |
| 1) shearing rate 3000 1/s for 5 minutes 2) 10 pphm IRA67 | | | | |

Table 6: Shear stability test results of example 6; coagulate particles in μg/g

| Particle size | Example 6 | Example 6 Anion exchange 2) | Example 6 Sheared 1) | Example 6 Anion exchange 2) Sheared 1) |
|---|---|---|---|---|
| 10-25 μm | 2981 | 3198 | 10060 | 5752 |
| 10-250 μm | 3710 | 4106 | 11381 | 6576 |
| > 10μm | 3710 | 4106 | 11381 | 6576 |
| 1) shearing rate 3000 1/s for 5 minutes 2) 10 pphm IRA67 | | | | |

**Measurement of** water whitening resistance

The adhesive polymer dispersion to be tested is coated on a transparent siliconized PETP film (polyethylene terephthalate polyester) and dried at 90 °C for 3 minutes. coating weight: 20 g/m$^2$
The coated adhesive film is immersed in water for 6 hours by inserting it in a UV standard cuvette (1 cm) filled with water (2/3 volume).

The color white is composed of all visible colors from red (700 nm) to blue (350 nm). By using UV-Vis Spectroscopy it is possible to screen all absorptions from 350 nm to 700 nm and to measure the average absorption in this wavelength range as a function of time that the adhesive film was immersed in water. This average absorption is converted into opacity (whitening). The average absorption from 350 nm to 700 nm are recorded as a function of time and normalized with the opacity of a white film having an absorption of 3.5:

$$\text{opacity\%} = \text{average absorption}_{(350\text{-}700nm)} / 3.5 \times 100$$

The results of the water whitening measurements for examples 1 and 2 are summarized in table 7.

Table 7 Water whitening test results

| | Opacity [%] |
|---|---|
| Example 1 | 0.75 |
| Example 1<br>anion exchange with 5 pphm IRA 402 OH | 0.2 |
| Example 1<br>anion exchange with 5 pphm IRA67 | 0.3 |
| Example 2 | 3.7 |
| Example 2<br>anion exchange with 5 pphm IRA 402 OH | 2.0 |
| Example 2 | 2.0 |

(continued)

| | Opacity [%] |
|---|---|
| anion exchange with 5 pphm IRA67 | |

Example 7

Acrylic polymer dispersion made by emulsion polymerization of

95 parts by weight n-butyl acrylate, 5 parts by weight of methacrylic acid
0,15 pphm tert.-dodecyl mercaptan
1.5 pphm seed latex
monomodal particle size, average 150 nm
solids content: 50%
viscosity: 100 mPa s

The results of the water whitening measurements are summarized in table 8.

Table 8 Water whitening test results

| | Opacity [%] |
|---|---|
| Example 7 | 29.8 |
| Example 7<br>+ Lewatit® adsorber VP 1064 | 168 |
| Example 7<br>cation exchange with IR120H | 96.2 |
| Example 7<br>Ion exchange with MB20 (mixed bed) | 70.7 |
| Example 7<br>anion exchange with IRA67 | 2.8 |

Example 8

Acrylic polymer dispersion made by emulsion polymerization of

85 parts by weight n-butyl acrylate, 10 parts by weight styrene, 5 parts by weight of methacrylic acid
0,26 pphm NaPS
0,2 pphm seed latex
monomodal, particle size 240 nm
solids content: 56%
viscosity:150 mPa s
Tg: -27 °C

Example 9

same as example 8 with addition of 0.75 pphm aluminum acetylacetonate
Example 10
same as example 8 except 84,5 parts by weight n-butyl acrylate, 10 parts by weight styrene, 5 parts by weight of methacrylic acid, 0.5 parts by weight diacetone acrylamide (DAAM), 0.25 pphm adipic acid dihydrazide (ADDH)
The results of the water whitening measurements of examples 8 to 10 are summarized in table 9.

Table 9: Water whitening test results

| | Opacity [%] |
|---|---|
| Example 8 | 15.5 |

(continued)

| | Opacity [%] |
|---|---|
| Example 8<br>anion exchange with IRA67 | 1.57 |
| Example 9 | 16.33 |
| Example 9<br>anion exchange with IRA67 | 0.58 |
| Example 10 | 19.5 |
| Example 10<br>anion exchange with IRA67 | 2.53 |

The results of the water whitening measurements of examples 3 and 8 are summarized in table 10.

Table 10: Water whitening test results

| | Opacity [%] |
|---|---|
| Example 3 (bimodal) | 35.7 |
| Example 3 (bimodal)<br>anion exchange [1)] | 1.72 |
| Example 8 (monomodal) | 15.5 |
| Example 8 (monomodal)<br>anion exchange [1)] | 1.57 |
| [1)] anion exchange with 10 pphm Amberlite® IRA67 for 1 hour | |

Example 11

Acrylic polymer dispersion made by emulsion polymerization of 79.5 parts by weight 2-ethylhexyl acrylate, 8 parts by weight methyl methacrylate, 8 parts by weight vinyl acetate, 2 parts by weight styrene, 2 parts by weight hydroxypropyl acrylate, 0.5 parts by weight of acrylic acid
solid content: 69% by weight

Ion exchange resin Amberlite® IRA67 is washed with deionized water and activated, using a 120 μm filter. 10 weight% of ion exchange resin (based on the solid content of the polymer dispersion) is added to the polymer dispersion, stirred for 1 h at room temperature and filtered over a 120 μm filter.

Test for migratable components (soluble in ethanol; based on ISEGA test method): 0,275 g ± 0,025 g of the polymer dispersion are applied and levelled on a 20 $cm^2$ aluminum surface dried at 90°C for 120 min. The dried sample is weighed. Then the dried sample is extracted in 145g Ethanol (95%) for 3 days at room temperature. The extracted sample is dried an weighed again. The test is repeated a second time. The migratable components are calculated according to the following formula:

$$m_{migratable\ components} = 100\% - \left(\frac{m_{\ before\ extraction}}{m_{\ after\ extraction}}\right) * 100\%$$

The results are summarized in table 11.

Table 11: Results of Test for migratable components migration test

| | Migratable components |
|---|---|
| Example 11<br>Without ion exchange treatment | 10,6% |
| Example 11 | 9,8% |

(continued)

| | Migratable components |
|---|---|
| With ion exchange treatment | |

## Claims

1. Method of improving shear stability of highly concentrated aqueous adhesive polymer compositions,

   wherein the aqueous adhesive polymer composition comprises more than 50% by weight, preferably at least 56% by weight, of at least one adhesive polymer which has been prepared by emulsion polymerization and which is dispersed in the aqueous adhesive composition,
   wherein the adhesive polymer has been made by free-radical emulsion polymerization of a monomer mixture comprising

   a) at least 60 wt.%, based on the total amount of monomers, of at least one monomer selected from the group consisting of C1 to C20 alkyl acrylates, C1 to C20 alkyl methacrylates, vinyl esters of carboxylic acids containing up to 20 carbons, vinylaromatics having up to 20 carbons, vinyl halides, vinyl ethers of alcohols containing 1 to 10 carbons, ethylenically unsaturated nitriles, aliphatic hydrocarbons having 2 to 8 carbons and one or two double bonds, and mixtures of these monomers,
   b) from 0.1 to 10 wt.%, based on the total amount of monomers, of at least one monomer having at least one acid group;
   c) optionally at least one further monomer, different from the monomers a) and b);

   said method comprises treating the aqueous adhesive polymer composition with at least one anion exchange resin and not treating the aqueous adhesive polymer composition with a cation exchange resin or with a mixed bed ion exchange resin.

2. The method according to claim 1, wherein the adhesive polymer is a pressure-sensitive adhesive polymer and has a glass transition temperature of less than 10 °C, preferably from -50°C to less than 10 °C, measured by differential scanning calorimetry according to ASTM D 3418-08 as the midpoint temperature when evaluating the second heating curve at a heating rate of 20°C/min.

3. The method according to any one of the preceding claims, wherein the adhesive polymer has a bimodal or a multimodal particle size distribution.

4. The method according to claim 3, wherein a first particle mode has a weight average particle diameter in the range of 50 to 200 nm, a second particle mode has a weight average particle diameter in the range of 250 to 1200 nm and the weight average particle diameters of the first and second mode differ by at least 50 nm, wherein the particle diameter is measured by light scattering, ISO standard 13321:1996.

5. The method according to any one of the preceding claims, wherein the anion exchange resin has a total anion exchange capacity of at least 0.9 eq/L and is used in an amount of more than 1 wt.-%, preferably in an amount of at least 1.5 wt.-%, based on the amount of adhesive polymer.

6. The method according to any one of the preceding claims, wherein the anion exchange resin is selected from the group consisting of copolymers of styrene and divinyl benzene with quaternary ammonium functional groups, copolymers of styrene and divinyl benzene with tertiary amine functional groups, crosslinked acrylic polymers with quaternary ammonium functional groups and crosslinked acrylic polymers with tertiary amine functional groups.

7. The method according to any one of the preceding claims, wherein the monomers a) are selected from the group consisting of C1 to C10 alkyl acrylates, C1 to C10 alkyl methacrylates, styrene, and mixtures of these monomers.

8. The method according to any one of the preceding claims, wherein the monomers b) having at least one acid group are selected from the group consisting of acrylic acid, methacrylic acid, itaconic acid, maleic acid, fumaric acid, crotonic acid, vinylacetic acid, vinyllactic acid, vinylsulfonic acid, styrenesulfonic acid, acrylamidoglycolic acid, acrylamidomethylpropane sulfonic acid, sulfopropyl acrylate, sulfopropyl methacrylate, their respective anhydrides and mixtures of these monomers.

**9.** The method according to any one of the preceding claims, wherein the monomers a) are used in an amount of at least 80 wt.%, based on the total amount of the monomers, and are selected from the group consisting of C1 to C10 alkyl acrylates, C1 to C10 alkyl methacrylates, styrene, and a mixture thereof; and the monomers b) are used in an amount of 0.5 to 7 wt.%, based on the total amount of the monomers, and are selected from the group consisting of acrylic acid, methacrylic acid, itaconic acid, and a mixture thereof.

**10.** The method according to any one of the preceding claims, wherein monomer a) comprises no ethyl acrylate or less than 10 wt.-% ethyl acrylate, based on the total amount of the monomers.

**11.** The method according to any one of the preceding claims, wherein the monomers c) are used in an amount of 0.1 to 10 wt.%, based on the total amount of the monomers, and are selected from the group consisting of amides of ethylenically unsaturated carboxylic acids, N-alkylolamides of ethylenically unsaturated carboxylic acids, phenyloxyethyl glycol mono(meth)acrylate, hydroxyalkyl esters of ethylenically unsaturated carboxylic acids, monomers containing amino groups, nitriles of unsaturated C3 to C8 carboxylic acids, bifunctional monomers which as well as an ethylenically unsaturated double bond have at least one glycidyl group, oxazoline group, ureido group, ureido-analogous group or carbonyl group, preferably diacetone acrylamide, and crosslinking monomers which have more than one radically polymerizable group.

**12.** The method according to any one of the preceding claims, wherein the aqueous adhesive polymer composition comprises at least one additive selected from the group consisting of crosslinkers, wetting agents, fillers, dyes, flow agents, thickeners, light stabilizers, biocides, defoamers, tackifiers and mixtures thereof.

**13.** Aqueous adhesive polymer compositions obtained by a method according to any one of claims 1 to 12.

**14.** Use of the aqueous adhesive polymer composition according to the preceding claim for making self-adhesive articles or for bonding substrates wherein the substrate of the self-adhesive article or at least one of the substrates to be bonded is a transparent substrate, preferably a transparent polymer film.

**15.** Use according to the preceding claim, wherein the transparent polymer film is a film of PVC, especially plasticized PVC, polyethylene terephthalate, polyethylene or polypropylene.

**16.** Self-adhesive article, preferably a transparent self-adhesive label, obtainable by use according to one of claims 14 to 15.

## Patentansprüche

**1.** Verfahren zur Verbesserung der Scherstabilität von hochkonzentrierten wässrigen Klebstoffpolymerzusammensetzungen,

wobei die wässrige Klebstoffpolymerzusammensetzung mehr als 50 Gew.-%, vorzugsweise mindestens 56 Gew.-%, mindestens eines durch Emulsionspolymerisation hergestelltes und in der wässrigen Klebstoffzusammensetzung dispergierten Klebstoffpolymers umfasst,
wobei das Klebstoffpolymer durch radikalische Emulsionspolymerisation einer Monomerenmischung, die

a) mindestens 60 Gew.-%, bezogen auf die Gesamtmenge der Monomere, mindestens eines Monomers aus der Gruppe bestehend aus C1- bis C20-Alkylacrylaten, C1- bis C20-Alkylmethacrylaten, Vinylestern von Carbonsäuren mit bis zu 20 Kohlenstoffatomen, Vinylaromaten mit bis zu 20 Kohlenstoffatomen, Vinylhalogeniden, Vinylethern von Alkoholen mit 1 bis 10 Kohlenstoffatomen, ethylenisch ungesättigten Nitrilen, aliphatischen Kohlenwasserstoffen mit 2 bis 8 Kohlenstoffatomen und einer oder zwei Doppelbindungen und Mischungen dieser Monomere,
b) 0,1 bis 10 Gew.-%, bezogen auf die Gesamtmenge der Monomere, mindestens eines Monomers mit mindestens einer Säuregruppe;
c) gegebenenfalls mindestens ein weiteres Monomer, das von den Monomeren a) und b) verschieden ist;

umfasst, hergestellt wurde;
wobei das Verfahren das Behandeln der wässrigen Klebstoffpolymerzusammensetzung mit mindestens einem Anionenaustauscherharz und kein Behandeln der wässrigen Klebstoffpolymerzusammensetzung mit einem Kationenaustauscherharz oder mit einem Mischbett-Ionenaustauscherharz umfasst.

**2.** Verfahren nach Anspruch 1, wobei das Klebstoffpolymer ein Haftklebstoffpolymer ist und eine Glasübergangstemperatur von weniger als 10 °C, vorzugsweise von -50 °C bis weniger als 10 °C, gemessen durch dynamische Differenzkalorimetrie gemäß ASTM D 3418-08 als Midpoint-Temperatur bei der Auswertung der zweiten Aufheizkurve in einer Heizrate von 20 °C/min, aufweist.

**3.** Verfahren nach einem der vorhergehenden Ansprüche, wobei das Klebstoffpolymer eine bimodale oder eine multimodale Teilchengrößenverteilung aufweist.

**4.** Verfahren nach Anspruch 3, wobei ein erster Teilchenmodus einen gewichtsmittleren Teilchendurchmesser im Bereich von 50 bis 200 nm aufweist, ein zweiter Teilchenmodus einen gewichtsmittleren Teilchendurchmesser im Bereich von 250 bis 1200 nm aufweist und sich die gewichtsmittleren Teilchendurchmesser des ersten Modus und des zweiten Modus um mindestens 50 nm unterscheiden, wobei der Teilchendurchmesser durch Lichtstreuung, ISO-Norm 13321:1996, gemessen wird.

**5.** Verfahren nach einem der vorhergehenden Ansprüche, wobei das Anionenaustauscherharz eine Gesamtanionenaustauschkapazität von mindestens 0,9 Äq./l aufweist und in einer Menge von mehr als 1 Gew.-%, vorzugsweise in einer Menge von mindestens 1,5 Gew.-%, bezogen auf die Menge des Klebstoffpolymers, verwendet wird.

**6.** Verfahren nach einem der vorhergehenden Ansprüche, wobei das Anionenaustauscherharz aus der Gruppe bestehend aus Copolymeren von Styrol und Divinylbenzol mit quartären ammoniumfunktionellen Gruppen, Copolymeren von Styrol und Divinylbenzol mit tertiären aminfunktionellen Gruppen, vernetzten Acrylpolymeren mit quartären ammoniumfunktionellen Gruppen und vernetzten Acrylpolymeren mit tertiären aminfunktionellen Gruppen ausgewählt wird.

**7.** Verfahren nach einem der vorhergehenden Ansprüche, wobei die Monomere a) aus der Gruppe bestehend aus C1- bis C10-Alkylacrylaten, C1- bis C10-Alkylmethacrylaten, Styrol und Mischungen dieser Monomere ausgewählt werden.

**8.** Verfahren nach einem der vorhergehenden Ansprüche, wobei die Monomere b) mit mindestens einer Säuregruppe aus der Gruppe bestehend aus Acrylsäure, Methacrylsäure, Itaconsäure, Maleinsäure, Fumarsäure, Crotonsäure, Vinylessigsäure, Vinylmilchsäure, Vinylsulfonsäure, Styrolsulfonsäure, Acrylamidoglykolsäure, Acrylamidomethylpropansulfonsäure, Sulfopropylacrylat, Sulfopropylmethacrylat, ihren jeweiligen Anhydriden und Mischungen dieser Monomere ausgewählt werden.

**9.** Verfahren nach einem der vorhergehenden Ansprüche, wobei die Monomere a) in einer Menge von mindestens 80 Gew.-%, bezogen auf die Gesamtmenge der Monomere, verwendet werden und aus der Gruppe bestehend aus C1- bis C10-Alkylacrylaten, C1- bis C10-Alkylmethacrylaten, Styrol und einer Mischung davon ausgewählt werden und die Monomere b) in einer Menge von 0,5 bis 7 Gew.-%, bezogen auf die Gesamtmenge der Monomere, verwendet werden und aus der Gruppe bestehend aus Acrylsäure, Methacrylsäure, Itaconsäure und einer Mischung davon ausgewählt werden.

**10.** Verfahren nach einem der vorhergehenden Ansprüche, wobei Monomer a) kein Ethylacrylat oder weniger als 10 Gew.-% Ethylacrylat, bezogen auf die Gesamtmenge der Monomere, umfasst.

**11.** Verfahren nach einem der vorhergehenden Ansprüche, wobei die Monomere c) in einer Menge von 0,1 bis 10 Gew.-%, bezogen auf die Gesamtmenge der Monomere, verwendet werden und aus der Gruppe bestehend aus Amiden von ethylenisch ungesättigten Carbonsäuren, N-Alkylolamiden von ethylenisch ungesättigten Carbonsäuren, Phenyloxyethylglykolmono(meth)-acrylat, Hydroxylalkylestern von ethylenisch ungesättigten Carbonsäuren, Aminogrupppen enthaltenden Monomeren, Nitrilen von ungesättigten C3-bis C8-Carbonsäuren, bifunktionellen Monomeren, die neben einer ethylenisch ungesättigten Doppelbindung mindestens eine Glycidylgruppe, Oxazolingruppe, Ureidogruppe, Ureido-analoge Gruppe oder Carbonylgruppe aufweisen, vorzugsweise Diacetonacrylamid, und vernetzenden Monomeren mit mehr als einer radikalisch polymerisierbaren Gruppe ausgewählt werden.

**12.** Verfahren nach einem der vorhergehenden Ansprüche, wobei die wässrige Klebstoffpolymerzusammensetzung mindestens ein Additiv aus der Gruppe bestehend aus Vernetzern, Netzmitteln, Füllstoffen, Farbstoffen, Verlaufsmitteln, Verdickern, Lichtschutzmitteln, Bioziden, Entschäumern, Klebrigmachern und Mischungen davon umfasst.

**13.** Wässrige Klebstoffpolymerzusammensetzungen, erhalten durch ein Verfahren nach einem der Ansprüche 1 bis 12.

**14.** Verwendung der wässrigen Klebstoffpolymerzusammensetzung nach dem vorhergehenden Anspruch zur Herstellung von selbstklebenden Artikeln oder zum Verkleben von Substraten, wobei es sich bei dem Substrat des selbstklebenden Artikels oder mindestens einem der zu verklebenden Substrate um ein transparentes Substrat, vorzugsweise eine transparente Polymerfolie, handelt.

**15.** Verwendung nach dem vorhergehenden Anspruch, wobei es sich bei der transparenten Polymerfolie um eine Folie aus PVC, insbesondere weichgemachtem PVC, Polyethylenterephthalat, Polyethylen oder Polypropylen handelt.

**16.** Selbstklebendender Artikel, vorzugsweise ein transparentes selbstklebendes Etikett, erhältlich durch die Verwendung nach einem der Ansprüche 14 bis 15.

**Revendications**

**1.** Procédé d'amélioration de la stabilité au cisaillement de compositions aqueuses hautement concentrées de polymère adhésif,

la composition aqueuse de polymère adhésif comprenant plus de 50 % en poids, préférablement au moins 56 % en poids, d'au moins un polymère adhésif qui a été préparé par polymérisation en émulsion et qui est dispersé dans la composition aqueuse d'adhésif,
le polymère adhésif ayant été préparé par polymérisation en émulsion par voie radicalaire libre d'un mélange de monomères comprenant

a) au moins 60 % en poids, sur la base de la quantité totale de monomères, d'au moins un monomère choisi dans le groupe constitué par des acrylates d'alkyle en C1 à C20, des méthacrylates d'alkyle en C1 à C20, des esters de vinyle d'acides carboxyliques contenant jusqu'à 20 carbones, des composés vinylaromatiques ayant jusqu'à 20 carbones, des halogénures de vinyle, des éthers de vinyle d'alcools contenant 1 à 10 carbones, des nitriles éthyléniquement insaturés, des hydrocarbures aliphatiques ayant 2 à 8 carbones et une ou deux doubles liaisons, et des mélanges de ces monomères,
b) de 0,1 à 10 % en poids, sur la base de la quantité totale de monomères, d'au moins un monomère ayant au moins un groupe de type acide ;
c) éventuellement au moins un monomère supplémentaire, différent des monomères a) et b) ;

ledit procédé comprenant le traitement de la composition aqueuse de polymère adhésif avec au moins une résine d'échange d'anions et le non traitement de la composition aqueuse de polymère adhésif avec une résine d'échange de cations ou avec une résine d'échange d'ions à lit mixte.

**2.** Procédé selon la revendication 1, le polymère adhésif étant un polymère adhésif sensible à la pression et ayant une température de transition vitreuse de moins de 10 °C, préférablement de -50 °C à moins de 10 °C, mesurée par calorimétrie différentielle à balayage selon la norme ASTM D 3418-08 comme la température de point milieu lors de l'évaluation de la deuxième courbe de chauffage à une vitesse de chauffage de 20 °C/min.

**3.** Procédé selon l'une quelconque des revendications précédentes, le polymère adhésif ayant une distribution de tailles de particules bimodale ou multimodale.

**4.** Procédé selon la revendication 3, un premier mode de particules ayant un diamètre moyen de particule en poids dans la plage de 50 à 200 nm, un deuxième mode de particules ayant un diamètre moyen de particule en poids dans la plage de 250 à 1 200 nm et les diamètres moyens de particule en poids du premier et du deuxième mode différant d'au moins 50 nm, le diamètre de particule étant mesuré par diffusion de lumière, norme ISO 13321:1996.

**5.** Procédé selon l'une quelconque des revendications précédentes, la résine d'échange d'anions ayant une capacité totale d'échange d'anions d'au moins 0,9 éq/L et étant utilisée en une quantité de plus de 1 % en poids, préférablement

en une quantité d'au moins 1,5 % en poids, sur la base de la quantité de polymère adhésif.

**6.** Procédé selon l'une quelconque des revendications précédentes, la résine d'échange d'anions étant choisie dans le groupe constitué par des copolymères de styrène et de divinylbenzène comportant des groupes fonctionnels de type ammonium quaternaire, des copolymères de styrène et de divinylbenzène comportant des groupes fonctionnels de type amine tertiaire, des polymères acryliques réticulés comportant des groupes fonctionnels de type ammonium quaternaire et des polymères acryliques réticulés comportant des groupes fonctionnels de type amine tertiaire.

**7.** Procédé selon l'une quelconque des revendications précédentes, les monomères a) étant choisis dans le groupe constitué par des acrylates d'alkyle en C1 à C10, des méthacrylates d'alkyle en C1 à C10, le styrène, et des mélanges de ces monomères.

**8.** Procédé selon l'une quelconque des revendications précédentes, les monomères b) ayant au moins un groupe de type acide étant choisis dans le groupe constitué par l'acide acrylique, l'acide méthacrylique, l'acide itaconique, l'acide maléique, l'acide fumarique, l'acide crotonique, l'acide vinylacétique, l'acide vinyllactique, l'acide vinylsulfonique, l'acide styrènesulfonique, l'acide acrylamidoglycolique, l'acide acrylamidométhylpropanesulfonique, l'acrylate de sulfopropyle, le méthacrylate de sulfopropyle, leurs anhydrides respectifs et des mélanges de ces monomères.

**9.** Procédé selon l'une quelconque des revendications précédentes, les monomères a) étant utilisés en une quantité d'au moins 80 % en poids, sur la base de la quantité totale des monomères, et étant choisis dans le groupe constitué par des acrylates d'alkyle en C1 à C10, des méthacrylates d'alkyle en C1 à C10, le styrène, et un mélange correspondant ; et les monomères b) étant utilisés en une quantité de 0,5 à 7 % en poids, sur la base de la quantité totale des monomères, et étant choisis dans le groupe constitué par l'acide acrylique, l'acide méthacrylique, l'acide itaconique, et un mélange correspondant.

**10.** Procédé selon l'une quelconque des revendications précédentes, le monomère a) ne comprenant pas d'acrylate d'éthyle ou moins de 10 % en poids d'acrylate d'éthyle sur la base de la quantité totale des monomères.

**11.** Procédé selon l'une quelconque des revendications précédentes, les monomères c) étant utilisés en une quantité de 0,1 à 10 % en poids, sur la base de la quantité totale des monomères, et étant choisis dans le groupe constitué par des amides d'acides carboxyliques éthyléniquement insaturés, des N-alkylolamides d'acides carboxyliques éthyléniquement insaturés, le mono(méth)acrylate de phényloxyéthylglycol, des esters d'hydroxyalkyle d'acides carboxyliques éthyléniquement insaturés, des monomères contenant des groupes amino, des nitriles d'acides carboxyliques insaturés en C3 à C8, des monomères bifonctionnels qui possèdent, aussi bien qu'une double liaison éthyléniquement insaturée, au moins un groupe glycidyle, un groupe oxazoline, un groupe uréido, un groupe analogue à uréido ou un groupe carbonyle, préférablement le diacétone acrylamide, et des monomères de réticulation qui possèdent plus d'un groupe polymérisable de manière radicalaire.

**12.** Procédé selon l'une quelconque des revendications précédentes, la composition aqueuse de polymère adhésif comprenant au moins un additif choisi dans le groupe constitué par des agents de réticulation, des agents mouillants, des charges, des colorants, des agents d'écoulement, des épaississants, des photostabilisants, des biocides, des antimousses, des agentstackifiants et des mélanges correspondants.

**13.** Compositions aqueuses de polymère adhésif obtenues par un procédé selon l'une quelconque des revendications 1 à 12.

**14.** Utilisation de la composition aqueuse de polymère adhésif selon la revendication précédente pour la préparation d'articles auto-adhésifs ou pour la liaison de substrats, le substrat de l'article auto-adhésif ou au moins l'un des substrats devant être liés étant un substrat transparent, préférablement un film de polymère transparent.

**15.** Utilisation selon la revendication précédente, le film de polymère transparent étant un film de PVC, notamment un PVC plastifié, un poly(téréphtalate d'éthylène), un polyéthylène ou un polypropylène.

**16.** Article auto-adhésif, préférablement étiquette auto-adhésive transparente, pouvant être obtenu(e) par une utilisation selon l'une des revendications 14 à 15.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9823656 A
- WO 0050480 A
- WO 2009127620 A
- EP 571069 A2


### Non-patent literature cited in the description


- **T.G. FOX.** *Bull. Am. Phys. Soc.,* 1956, vol. 1, 123
- Ullmann's Encyclopädie der technischen Chemie. Verlag Chemie, 1980, vol. 19, 18
- Ullmann's Ecyclopedia of Industrial Chemistry. VCH, 1992, vol. 5,A21, 169
- **J. BRANDRUP ; E.H. IMMERGUT.** Polymer Handbook. J. Wiley, 1966
- **J.BRANDRUP, E.H. IMMERGUT.** Polymer Handbook. J. Wiley, 1975
- **J.BRANDRUP, E.H. IMMERGUT.** Polymer Handbook. J. Wiley, 1989
- Makromolekulare Stoffe [Macromolecular Compounds. **HOUBEN-WEYL.** Methoden der organischen Chemie. Georg-Thieme-Verlag, 1961, vol. XIV/1, 411-420
- Makromolekulare Stoffe [Macromolecular Compounds. **HOUBEN-WEYL.** Methoden der organischen Chemie. Georg Thieme Verlag, 1961, vol. 14/1, 192-208